# EUROPEAN PATENT SPECIFICATION

(11) **EP 0 909 206 B1**
(45) Date of publication and mention of the grant of the patent: **16.08.2000**
(21) Application number: 97918250.8
(22) Date of filing: 28.04.1997
(51) Int. Cl.: B01D 11/04, B01D 61/38

(54) **EXTRACTION METHOD AND APPARATUS**
VERFAHREN UND VORRICHTUNG ZUR EXTRAKTION
PROCEDE ET DISPOSITIF D'EXTRACTION

(30) Priority: 30.04.1996 GB 9609025
(43) Date of publication of application: 21.04.1999
(73) Proprietor: British Nuclear Fuels PLC, Risley Warrington Cheshire, WA3 6AS (GB)
(72) Inventor: BROAN, Christopher, J., British Nuclear Fuels plc, Preston PR4 0XJ (GB); WILLIAMS, Trevor, J., University of Southampton, Southampton SO17 1BJ (GB); BAILEY, Adrian, G., University of Southampton, Southampton SO17 1BJ (GB)
(74) Representative: Goddard, David John
(86) International application number: GB9701155
(87) International publication number: WO9740902

(56) References cited:
- WO-A-97/23263
- JOURNAL OF MEMBRANE SCIENCE, vol. 52, no. 1, 15 August 1990, pages 77-88, XP000172713 ZHONG-MAO GU: "A NEW LIQUID MEMBRANE TECHNOLOGY-ELECTROSTATIC PSEUDO LIQUID MEMBRANE"
- JOURNAL OF MEMBRANE SCIENCE, vol. 106, no. 1/02, 13 October 1995, pages 131-145, XP000586952 YANG X -J ET AL: "EXTRACTION AND SEPARATION OF SCANDIUM FROM RARE EARTHS BY ELECTROSTATIC PSEUDO LIQUID MEMBRANE"
- CHEMICAL ABSTRACTS, vol. 109, no. 12, 19 September 1988 Columbus, Ohio, US; abstract no. 95492, GU, ZHONGMAO ET AL: "Apparatus and method for electrostatic -type liquid - membrane extraction of fluids" XP002026416 & CN 86 101 730 A (CHINESE ACADEMY OF ATOMIC ENERGY SCIENCES, PEOP. REP. CHINA) cited in the application & DATABASE WPI Week 8842 Derwent Publications Ltd., London, GB; AN 88-293378

## Description

The present invention relates to improvements to the so-called "electrostatic pseudo liquid membrane" (ESPLIM) method of separation of metal ions from aqueous solutions.

The Journal of membrane Science, Vol.52, No. 1, 15 August 1990, pages 78-88 describes the basic ESPLIM method of separation.

Chinese patent application number CN 86101730A, the principles of which are based on the technology described in the above reference and on which the preamble of claims 1 and 5 are based, describes a separation technique which enables the purification of aqueous solutions and concentration of solutes in aqueous solutions.

The technique includes the steps of passing droplets of an aqueous feed solution which it is desired to purify and/or from which it is desired to extract metal ions for example, under the influence of gravity, through a first region of a non-polar carrier liquid in which is dissolved a chemical having high affinity for the metal ion or ions to be removed whilst simultaneously subjecting the droplets to a high voltage electrostatic field so as to break up the droplets into a multiplicity of much smaller droplets in order to increase their surface area to volume ratio. The metal ions are complexed by the dissolved chemical into the carrier liquid and are driven, principally by the concentration gradient so formed, to a second region in the non-polar carrier liquid through which is passing under the influence of gravity a stream of droplets of an aqueous "stripping" solution which has a chemically higher affinity for the metal ion than the complexing chemical in the carrier liquid. The stripping solution droplets are also simultaneously subjected to a high voltage electrostatic field so as to break them up into a multiplicity of much smaller droplets and thus to increase their surface area to volume ratio. The metal ions are thus concentrated into the stripping solution and the aqueous feed solution is largely purified of the metal ions. As the very small droplets of the purified feed solution and the stripping solution, the former now having a lower concentration of the metal ions and the latter now having a high concentration of the required metal ions, pass out of the high voltage electrostatic field, they coalesce and fall under gravity into mutually separated first and second collecting vessels, respectively, and from which they can be removed.

The first and second regions of the carrier liquid are separated by a barrier or baffle which is intended to allow substantially uninterrupted flow and passage of the carrier liquid to and from the first and second regions but, is also intended to impede or prevent the passage of the aqueous feed solution from the first region into the second region and, the passage of the stripping solution from the second region to the first region.

Whilst the ESPLIM technique has produced very good results in terms of high concentration factors between the feed solution and the stripping solution, after reaction, of up to 300, the process could be improved by reducing the leakage or swelling of the raw aqueous feed solution to the second region and leakage or swelling of the stripping solution with the extracted metal ions to the first region through the barrier. The terms "leakage" and "swelling" are largely synonymous and relate to the unwanted transfer of raw feed solution droplets to the stripping side and transfer of stripping solution droplets to the feed side. We have found that such leakage is caused by the small droplets becoming entrained in the flow of carrier liquid and being carried across the baffle region.

Leakage of raw feed solution to the second region is not merely a question of dilution of the highly concentrated metal ions in the stripping solution but may also involve the contamination of the concentrated stripping solution if, for example, it is desired that only one species of metal ion from two or more is to be selectively extracted from the feed solution.

Similarly, leakage of the concentrated stripping solution from the second region to the first region and into the "purified" aqueous feed solution or raffinate will also cause contamination thereof and decrease the efficiency of the process.

It is an object of the present invention to decrease the leakage between the two regions in the carrier liquid and also to improve the efficiency of the separation method.

According to a first aspect of the present invention, there is provided a method for the extraction of a solute from an aqueous feed solution into an aqueous stripping solution, the method comprising the steps of providing at least one stream of each of said feed solution and said stripping solution passing through a continuous phase of a non-polar carrier liquid; said carrier liquid having therein a chemical having an affinity for ions of at least one species in said solute in said feed solution; each of said at least one streams of feed and stripping solutions being under the influence of a first and a second electrostatic field, respectively, for at least a part of their passage time through said carrier liquid so as to break up said streams into a multiplicity of droplets of each of said solutions; providing baffle means between said at least one streams of each of the feed and stripping solutions to minimise transfer of feed solution towards said stripping solution stream and transfer of said stripping solution towards said feed solution stream; said baffle means also being positioned between the first and second electrostatic fields to which the feed and stripping solution streams are subjected; and, providing mutually separated receiving means to collect the streams of said feed and said stripping solutions after they pass out of said electrostatic fields; said method being characterised in that a third electrostatic field is applied across the region of said baffle the third electrostatic field being at such a level as to promote coalescence of said droplets straying outside of said first and second electrostatic fields in the region of said baffle means.

The third electrostatic field is at such a level as to promote coalescence of said droplets straying outside of said first and second high voltage electrostatic fields in the region of said baffle means.

The third electrostatic field may be at an intensity lower than that of the first or the second electrostatic fields.

It has been found that a small proportion of the feed and stripping solutions when subjected to the electrostatic fields to cause disintegration into very small droplets "leak" out of the area of the electrostatic field. The cause of this leakage is due to the fact that the size of the droplets so formed are so small that they become entrained in the carrier liquid and are taken by the flow between the two regions of the feed and stripping solutions from one to the other. Above a critical field intensity measured in kV/cm, the feed and stripping solutions streams, which may themselves be streams of droplets, are broken up into smaller droplets. However, at field intensities below this critical intensity, the effect of the electrostatic field may be to actually promote coalescence of the entrained droplets. Thus, promoting disentrainment from the carrier liquid and making them more susceptible to falling under the effect of gravity into the respective receiving means before being carried across the baffle means due to being entrained in the carrier liquid flow.

The method may be applied to conventionally constructed apparatus save for employing suitable control means by control of the relative electrostatic potentials between the electrodes used for applying the first and second electrostatic fields. For example, the potentials of the inner electrodes either side of the barrier or baffle means may be arranged such that their relative potential difference establishes a field intensity which is, for example, below a critical field intensity for causing break-up of the feed and stripping solution streams and is of a level such as to promote coalescence.

The streams of the feed and/or stripping solutions may be constituted by continuous streams or by streams of droplets which are themselves disintegrated into smaller droplets by the action of the high intensity electrostatic fields which are applied thereto.

As set out in our copending International Patent Application No.WO-A-97 23263 which falls under Art. 54(3) EPC, we have found that the efficiency of the ESPLIM process may be improved by operating the feed and stripping side cells at different intensities. The side having the slower mass transfer being operated at a higher intensity since the smaller droplet size produced by the higher field intensity provides a greater surface area to volume ratio for more efficient extraction of the desired species. This has enabled the overall efficiency of the ESPLIM process to be improved due to an increase in the rate of reaction in what would otherwise be a process rate limiting step. As an example, we have found that when extracting Co ions from the feed solution, the process efficiency is improved by operating the stripping side at a higher intensity. In contrast to this, we have found that when extracting U from the feed solution, the overall process efficiency is improved by operating the feed side at a high intensity. We have found in the present invention that whilst the provision of a third, controlled electrostatic field across the baffle region does reduce leakage of droplets when the third field intensity lies within a particular range and below the first and second field intensities, having regard to the other process variables in a particular apparatus set-up, a totally unexpected benefit caused by the field across the baffle region has been to greatly increase the rate of mixing or diffusion of the complexed ligand across the barrier region without any apparent increase in the leakage or swelling. Thus, what again would be a process rate limiting step, i.e. the mixing or diffusion rate of the complexed ligand from the feed cell to the stripping cell is greatly increased, thus further increasing the overall efficiency of the ESPLIM process.

We have further found that if the field intensity across the baffle region is too low, the leakage is actually increased but with a noticeable improvement in the mixing or diffusion rate of the complexed ligand as noted above.

However, above a lower field strength level, but initially still well below the field strength at which further disintegration of droplets occurs, the leakage again begins to decrease to a rate which is at least as low as and eventually lower than that without the third field but the diffusion rate of the complexed ligand rises markedly with a continuing decrease in the leakage rate.

Under the conditions of the experiments carried out, we have found that the third field at intensities from zero to about 2kV/cm actually cause an increase in leakage, but increase the mixing rate; whilst intensities from about 2kV/cm to about 5kV/cm cause a continuing lowering of the leakage rate whilst greatly increasing the rate of mixing or diffusion of the complexed ligand across the baffle region. It is stressed that whilst these figures pertain to the apparatus and process conditions used in the experiments carried out, different apparatus and process conditions may possibly result in different figures being achieved. Furthermore, the above figures were achieved with a feed cell first field intensity of about 6kV/cm and a strip cell second field intensity of about 8kV/cm. Thus, whilst a third field intensity of about 5kV/cm across the baffle region might be thought to be high enough to cause some disintegration of droplets rather than coalescence thereof, the fact remains that the third field intensity across the baffle was lower than the intensities of the first and second fields, leakage was reduced and diffusion rate was greatly increased thus improving the overall efficiency of the ESPLIM process.

Preferably, the range of the third field intensity across the baffle may be between 3kV/cm and 5kV/cm under the conditions of experiments carried out, which may also pertain to a greater range of experimental conditions as may be determined by those skilled in the art by further experimentation without straying outside of the scope of the present invention.

According to a second aspect of the present invention, there is provided apparatus for the extraction of a solute from an aqueous feed solution into an aqueous stripping solution, the apparatus comprising vessel means for containing a continuous non-polar carrier liquid, the carrier liquid having therein a chemical having an affinity for ions of at least one species in said solute in said feed solution; means for providing at least one stream of each of said feed and stripping solutions through said carrier liquid in said vessel means; electrode means for applying a first and a second high intensity electrostatic field to each of said feed and stripping solution streams, respectively so as to cause said streams to break up into a multiplicity of smaller droplets; baffle means positioned between the electrode means for establishing said first and second high intensity electrostatic fields to minimise transfer across the baffle of feed and stripping solutions; mutually separate receiving means for collecting said feed and stripping solutions after they have passed through said first and second high intensity electrostatic fields, respectively; the apparatus being characterised by further including means for applying a third electrostatic field about said baffle means, said third electrostatic field being at such a level as to promote coalescence of said droplets straying outside of said first and second electrostatic fields in the region of said baffle means.

Said third electrostatic field is of a different intensity than said first and second electrostatic fields.

The third electrostatic field may be applied by various means. For example, separate electrodes positioned about the baffle means and dedicated to the purpose may be provided, the electrodes having their own separate power supply. Alternatively, the third electrostatic field may be provided by connecting the cell electrodes through a multi-tap transformer or by means of a phase difference between AC potentials applied to the electrodes separated by said baffle.

The electrodes may be made from mesh, perforated plate or from a wire array.

In order that the present invention may be more fully understood, an example will now be described by way of illustration only with reference to the accompanying drawings, of which:
Figure 1 shows a schematic arrangement of apparatus showing the basic operation and method of the prior art ESPLIM method;
Figure 2 shows a schematic apparatus according to an embodiment of the second aspect of the present invention wherein a third electrostatic field is applied about the baffle means; and
Figure 3 which shows a graph of swelling Vs third field intensity across the baffle.
Referring now to the drawings and where the same or similar features are denoted by common reference numerals.

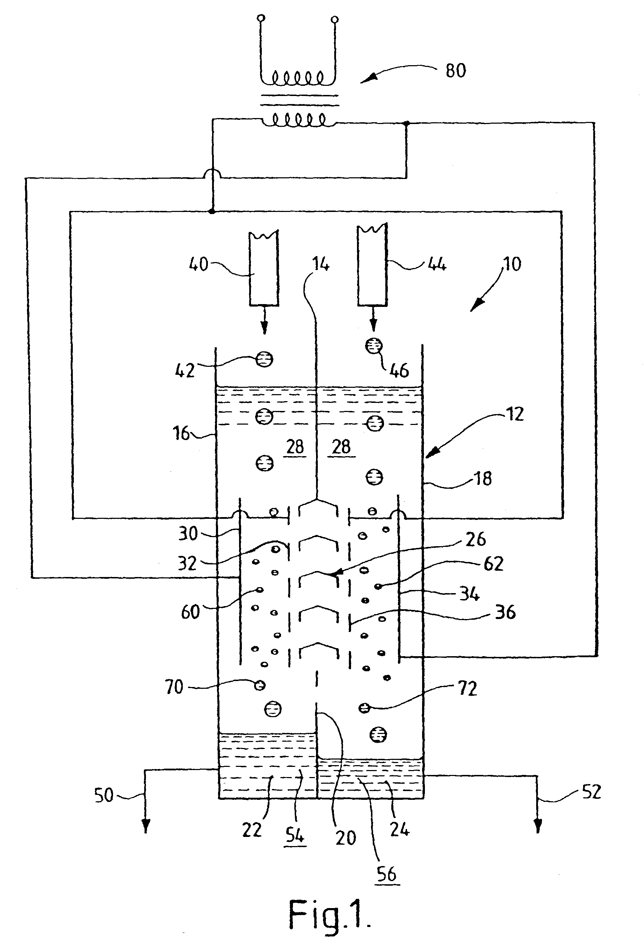

Figure 1 shows a schematic cross section through an apparatus 10 for carrying out the ESPLIM method of separation according to the prior art. The apparatus 10 comprises a reaction tank or vessel 12 which is divided at its upper portion by a wall 14 into an extraction cell 16 and a stripping cell 18. At the lower end of the tank 12 there is a wall 20 which divides the tank into two receiving vessels or settling tanks 22, 24 for the purified feed solution or raffinate and, for the concentrated extractant in the stripping solution, respectively. Situated between the upper wall 14 and the lower wall 20 is a baffle 26 which allows an organic carrier liquid 28, in this case kerosene, to move freely throughout the tank 12. Electrodes 30, 32 are situated in the extraction cell side 16, between which a first high voltage AC electrostatic field may be applied. Electrodes 34, 36 are situated in the stripping cell side 18, between which a second high voltage AC electrostatic field may be applied. In each of the cells 16, 18 at least one of the electrodes is insulated with, for example, a coating of polytetrafluoroethylene (PTFE) to prevent short circuiting within each cell. A controllable high tension AC supply transformer 80 is provided for the electrodes so as to establish a desired potential and consequently a field intensity therebetween. A conduit 40 is provided above the extraction cell 16 to supply a stream of feed solution 42 which is to be purified, into the carrier liquid 28. The conduit 40 has connected thereto pump means (not shown) and a reservoir tank (not shown) to provide a continuous supply of aqueous feed solution at a controlled rate. Another conduit 44 is provided above the stripping cell 18 to supply a stream 46 of aqueous stripping solution into the carrier liquid 28. The conduit 44 also has connected thereto pump means (not shown) and a reservoir tank (not shown) to provide a continuous supply of stripping solution at a controlled rate. Each of the receiving vessels 22, 24 have conduits 50, 52 to enable the raffinate 54 and the concentrate 56 to be drawn off as the level in each vessel rises or as required. The raffinate and concentrate are pumped to collection vessels (not shown) for disposal or further processing as required.

In operation, the apparatus 10 functions as follows and using as an example the extraction of cobalt metal ions from the feed solution 42 in which the Co ions are present at a concentration of 1000ppm in a 0.1M aqueous sodium acetate solution, the feed solution being supplied at a flow rate of 200 ml/hr into the carrier liquid. The stripping solution comprises a 1.0M solution of sulphuric acid which is supplied at a flow rate of 10 ml/hr into the carrier liquid. The diluent kerosene carrier liquid 28 has dissolved therein 10 volume% of di-(2-ethyl-hexyl)phosphoric acid (D2EHPA) extractant. An AC electrostatic field of 3KV supplied via the transformer 80 from the mains supply is applied between the electrodes 30, 32 and 34, 36 to establish the first and second electrostatic fields. As the relatively large droplets of the feed solution 42 and stripping solution 46 fall into the extraction cell 16, they are subjected to the electrostatic fields between the electrodes 30, 32 and 34, 36 which have the effect of causing the relatively large droplets to break up into a multiplicity of microdroplets 60, 62 thereby greatly increasing the surface area to volume ratio of the two aqueous phases. In the extraction cell 16, the Co ions are extracted from the aqueous solution droplets- due to the affinity of the D2EHPA thus causing the concentration of the Co-complex to rise in the extraction cell in the kerosene phase. Due to the concentration gradient so formed, the Co-complex diffuses through the kerosene through the baffle 26 towards the stripping cell 18 where the Co-complex reacts with the microdroplets 62 of the stripping solution where the Co-complex reacts with the sulphuric acid to free the D2EHPA, the Co ions reacting with the sulphuric acid and being concentrated therein. The D2EHPA then migrates back through the baffles 26 to the extraction cell 16 to establish a continuous chemical process. As the reacted droplets 60, 62 pass through the electrostatic fields under the influence of gravity, they eventually pass out of the electrostatic fields and begin to coalesce into larger droplets 70, 72 which fall into the receiving vessels 22, 24 as appropriate.

In experiments under the conditions described above, an initial feed solution of a Co concentration of 1000 ppm was purified to a concentration of 10 ppm in the raffinate 54, whilst the concentrate 56 had a concentration of 19,750 ppm of Co ions.

Therefore, it will be seen that the method makes it possible to concentrate metal ions to a level where it is both practicable and economic to extract the concentrated metal ions so as to recover and reuse the metal per se. An example of this may be uranium. It is also clear that the feed solution may be so purified as to make disposal easier and/or less hazardous.

The method of the present invention may be carried out with an apparatus substantially similar to that described in Figure 1 wherein a high potential is applied between the electrodes 30, 32 and 34, 36, respectively, so as to promote break-up of the droplets 42, 46 into much smaller droplets. However, a potential may be applied between the electrodes 32, 36 so as to establish a field intensity such as to promote coalescence of entrained microdroplets in the region of the baffles 26 to cause the coalesced droplets to fall out of the carrier and so prevent them from leaking across the baffle region. As an example of the relative potentials which may be applied across the electrodes 30, 32, 36 and 34 with respect to ground, respectively, these may be AC or DC potentials of: 30, +9KV; 32, +3KV; 36, -2KV; 34, -10KV. Therefore, the potential difference between electrodes 32 and 36 and across the baffle will be 5kV/cm for electrode spacing of 1cm, i.e. less than the intensities across the feed and strip cells. It should be borne in mind that the spacing of the electrodes is important as the spacing will determine field intensity, measured for example in terms of kV/cm. Thus, a field of 10kV across electrodes spaced 2cm apart will give substantially the same effect as 5kV across electrodes spaced 1cm apart.

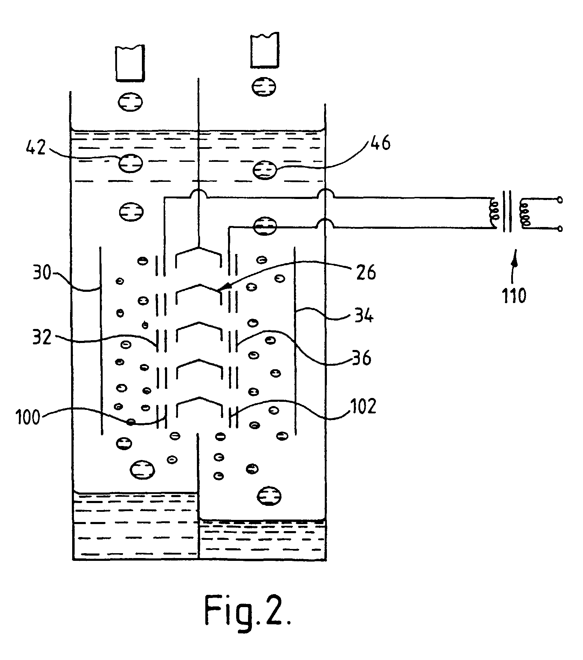

Figure 2 of the drawings shows a schematic apparatus according to an embodiment of the second aspect of the present invention. In this embodiment, the structure of the apparatus may also be substantially similar to that described with reference to Figure 1 where electrodes 30, 32, 34 and 36 are provided. However, as shown in Figure 2 an additional pair of electrodes 100, 102 is provided either side of the baffle region. The electrodes 100, 102 having a third independent electrostatic field applied across them by a transformer 110 across the baffle region.

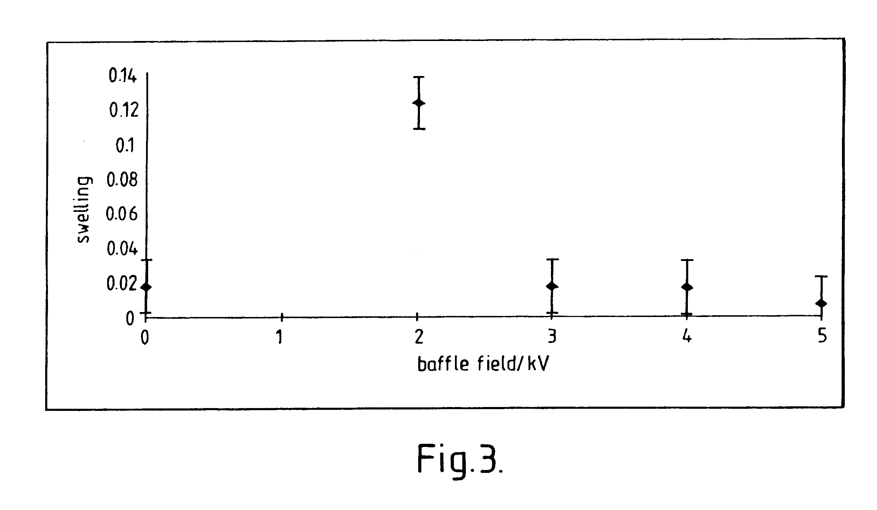

Figure 3 shows a graph of swelling or leakage as defined hereinbefore against the level of the third field intensity across the baffle region measured in kV/cm. As may be seen, at potentials from around zero up to about 2kV/cm the swelling actually increases whilst at potentials from about 2kV/cm up to about 5kV/cm, the swelling decreases to the original level without the third field and begins to decrease further. However, the rate of mixing, or diffusion of the complexed ligand across the baffle region is greatly increased with rising potential. Conditions of the experiments resulting in the graph of Figure 3 were: cell electrode spacing 9mm, baffle electrode spacing 11mm, polypropylene (0.2mm) insulated wire electrodes; 5kV dispersion voltage in both feed and strip cells; organic phase 10% D2EHPA in Isopar M (tradename for a kerosene fraction); feed 100ppm sodium perrhenate at 10ml/min, strip 1M sulphuric acid at 10ml/min.

Although field intensities are quoted at a specific value, eg 5kV/cm, some of the potential is lost due to factors such as electrode insulation for example thus, the actual field intensity may be slightly lower, at say 4 kV/cm for example. Therefore, field intensities quoted in this specification are nominal intensities with no allowance made for losses which may occur.

Thus, the overall efficiency of the ESPLIM process is improved significantly according to the method and apparatus of the present invention.

## Claims

1. A method for the extraction of a solute from an aqueous feed solution (42) into an aqueous stripping solution (46), the method comprising the steps of providing at least one stream of each of said feed solution and said stripping solution passing through a continuous phase of a non-polar carrier liquid (28); said carrier liquid having therein a chemical having an affinity for ions of at least one species in said solute in said feed solution; each of said at least one streams of feed (42) and stripping solutions (46) being under the influence of a first (30, 32) and a second (34, 36) electrostatic field, respectively, for at least a part of their passage time through said carrier liquid so as to break up said streams into a multiplicity of droplets (60, 62) of each of said solutions; providing baffle means (26) between said at least one streams of each of the feed and stripping solutions to minimise transfer of feed solution towards said stripping solution stream and transfer of said stripping solution towards said feed solution stream; said baffle means also being positioned between the first and second electrostatic fields to which the feed and stripping solution streams are subjected; and, providing mutually separated receiving means (22, 24) to collect the streams of said feed (54) and said stripping (56) solutions after they pass out of said electrostatic fields; said method being characterised in that a third electrostatic field (100, 102) is applied across the region of said baffle (26), the third electrostatic field being at such a level as to promote coalescence of said droplets (60, 62) straying outside of said first and second electrostatic fields in the region of said baffle means.

2. A method according to claim 1 wherein the thhird field intensity across the baffle is lower than the critical field intensity for causing break-up of the feed and stripping solution streams.

3. A method according to either claim 1 or claim 2 wherein the third field (100, 102) intensity is lower than either the first or second field intensities.

4. A method according to any one preceding claim wherein the nominal field intensity across the baffle region is in the range from 2kV/cm to 5kV/cm.

5. Apparatus for the extraction of a solute from an aqueous feed solution (42) into an aqueous stripping solution (46), the apparatus comprising vessel means (12) for containing a continuous non-polar carrier liquid (28), the carrier liquid having therein a chemical having an affinity for ions of at least one species in said solute in said feed solution; means (40, 44) for providing at least one stream of each of said feed and stripping solutions through said carrier liquid in said vessel means; electrode means (30, 32; 34, 36) for applying a first and a second high intensity electrostatic field to each of said feed and stripping solution streams, respectively so as to cause said streams to break up into a multiplicity of smaller droplets (60, 62); baffle means (26) positioned between the electrode means for establishing said first and second high intensity electrostatic fields to minimise transfer across the baffle of feed and stripping solutions; mutually separate receiving means for collecting said feed and stripping solutions after they have passed through said first and second high intensity electrostatic fields, respectively; the apparatus being characterised by further including means (100, 102) for applying a third electrostatic field about said baffle means, said third electrostatic field being at such a level as to promote coalescence of said droplets (60, 62) straying outside of said first and said second electrostatic fields in the region of said baffle means.

6. Apparatus according to claim 5 wherein the third electrostatic field is applied by separate electrodes (100, 102) positioned about the baffle means (26).

7. Apparatus according to claim 5 or 6 wherein the third electrostatic field is provided by applying an electrical potential (110) across the electrodes positioned about the baffle.

8. Apparatus according to any one of preceding claims 5 to 7 wherein the electrodes are made from mesh, perforated plate or from a wire array.

9. Apparatus according to claim 7 when dependent upon claim 5 wherein the potential is applied by connection of the electrodes within the feed and stripping cells separated by the baffle means to a single multi-tap transformer.

10. Apparatus according to claim 7 when dependent upon claim 5 wherein the potential is applied by means of a phase difference between AC potentials applied to the electrode pairs in the two cells separated by the baffle means.

## Patentansprüche

1. Verfahren zur Extraktion eines gelösten Stoffes aus einer wäßrigen Einsatzlösung (42) in eine wäßrige Abziehlösung (46), wobei das Verfahren die folgenden Schritte umfaßt: Bereitstellen wenigstens je eines Stromes der Einsatzlösung bzw. der Abziehlösung, der durch eine kontinuierliche Phase einer nicht-polaren Trägerflüssigkeit (28) fließt; wobei diese Trägerflüssigkeit eine Chemikalie mit einer Affinität für Ionen wenigstens einer Spezies in dem gelösten Stoff in der Einsatzlösung enthält; jeder der wenigstens einen Ströme der Zuführ- (42) und Abziehlösungen (46) zumindest über einen Teil der Zeit ihres Durchflusses durch die Trägerflüssigkeit unter dem Einfluß eines ersten (30, 32) bzw. eines zweiten (34, 36) elektrostatischen Feldes stehen, um die Ströme in eine Vielzahl von Tröpfchen (60, 62) jeder der Lösungen zu zerteilen; Bereitstellen einer Baffle-Einrichtung (26) zwischen dem wenigstens einen Strom jeder der Zuführ- und Abziehlösungen, um die Übertragung von Einsatzlösung in den Abziehlösungsstrom und die Übertragung der Abziehlösung in den Einsatzlösungsstrom zu minimieren; wobei die Baffle-Einrichtung auch zwischen dem ersten und dem zweiten elektrostatischen Feld, denen der Einsatzlösungs- und der Abziehlösungsstrom ausgesetzt werden, angeordnet ist; und Bereitstellen voneinander getrennter Aufnahmemittel (22, 24) zum Sammeln der Ströme der Einsatz- (54) und der Abziehlösung (56), nachdem diese aus den elektrostatischen Feldern herausfließen; wobei das Verfahren dadurch gekennzeichnet ist, daß ein drittes elektrostatisches Feld (100, 102) über den Bereich der Baffle-Einrichtung (26) angelegt wird, und das dritte elektrostatische Feld ein Niveau aufweist, das die Vereinigung der Tröpfchen (60, 62), die aus dem ersten und dem zweiten elektrostatischen Feld herauswandem, im Bereich der Baffle-Einrichtung fördert.

2. Verfahren nach Anspruch 1, bei dem die Intensität des dritten Feldes über die Baffle-Einrichtung hinweg niedriger als die kritische Feldintensität zur Verursachung der Aufspaltung des Einsatzlösungs- und des Abziehlösungsstromes ist.

3. Verfahren nach Anspruch 1 oder Anspruch 2, bei dem die Intensität des dritten Feldes (100, 102) niedriger als die Intensität des ersten oder des zweiten Feldes ist.

4. Verfahren nach einem vorhergehenden Anspruch, bei dem die nominale Feldintensität im Baffle-Bereich im Bereich von 2kV/cm bis 5kV/cm liegt.

5. Vorrichtung zur Extraktion eines gelösten Stoffes aus einer wäßrigen Einsatzlösung (42) in eine wäßrige Abziehlösung (46), wobei die Vorrichtung folgendes umfaßt: ein Gefäß (12) zur Aufnahme einer kontinuierlichen, nicht-polaren Trägerflüssigkeit (28), wobei die Trägerflüssigkeit eine Chemikalie mit einer Affinität für Ionen wenigstens einer Spezies in dem gelösten Stoff in der Einsatzlösung enthält; eine Einrichtung (40, 44) zur Bereitstellen wenigstens eines Stromes sowohl der Einsatz- als auch der Abziehlösung durch die Trägerflüssigkeit in dem Gefäß; eine Elektrodeneinrichtung (30, 32; 34, 36) zum Anlegen eines ersten und eines zweiten elektrostatischen Feldes hoher Intensität an den Einsatz- bzw. den Abziehlösungsstrom, um zu bewirken, daß sich die Ströme in eine Vielzahl kleinerer Tröpfchen (60, 62) aufspalten; eine Baffle-Einrichtung (26), die zwischen der Elektrodeneinrichtung zum Erzeugen eines ersten und eines zweiten elektrostatischen Feldes hoher Intensität angeordnet ist, um die Übertragung der Einsatz- und der Abziehlösung über die Baffle-Einrichtung hinweg zu minimieren; voneinander getrennte Aufnahmemittel zum Sammeln der Einsatz- und der Abziehlösung, nachdem diese durch das erste bzw. das zweite elektrostatische Feld hoher Intensität geströmt sind; wobei die Vorrichtung dadurch gekennzeichnet ist, daß sie ferner eine Einrichtung (100, 102) zum Anlegen eines dritten elektrostatischen Feldes um die Baffle-Einrichtung herum aufweist, wobei das dritte elektrostatische Feld ein Niveau aufweist, das die Vereinigung der Tröpfchen (60, 62), die aus dem ersten und dem zweiten elektrostatischen Feld herauswandem, im Bereich der Baffle-Einrichtung fördert.

6. Vorrichtung nach Anspruch 5, bei der das dritte elektrostatische Feld durch getrennte Elektroden (100, 102) angelegt wird, die um die Baffle-Einrichtung (26) herum angeordnet sind.

7. Vorrichtung nach Anspruch 5 oder 6, bei der das dritte elektrostatische Feld durch Anlegen eines elektrischen Potentials (110) an den um die Baffle-Einrichtung herum angeordneten Elektroden bereitgestellt wird.

8. Vorrichtung nach einem der vorhergehenden Ansprüche 5 bis 7, bei der die Elektroden aus einem Sieb, perforiertem Blech oder einer Anordnung von Drähten hergestellt sind.

9. Vorrichtung nach Anspruch 7, sofern dieser von Anspruch 5 abhängig ist, wobei das Potential durch Anschließen der Elektroden innerhalb der durch die Baffle-Einrichtung getrennten Einsatz- und Abzugszellen an einen einzigen Transformator mit mehreren Stromabnehmern angelegt wird.

10. Vorrichtung nach Anspruch 7, sofern dieser von Anspruch 5 abhängig ist, wobei das Potential mittels eines Phasenunterschiedes zwischen Wechselstrom-Potentialen angelegt wird, die an die Elektrodenpaare in den beiden durch die Baffle-Einrichtung getrennten Zellen angelegt werden.

## Revendications

1. Procédé pour extraire un corps dissout à partir d'une solution aqueuse d'alimentation (42) dans une solution (46) aqueuse de stripage, le procédé comprenant les étapes de : fournir au moins un courant de chacune des dites solution d'alimentation et solution de stripage, passant au travers d'une phase continue d'un liquide (28) porteur non-polaire ; le dit liquide porteur ayant en son sein un corps chimique présentant une affinité pour des ions d'au moins une espèce dans le dit corps dissout dans la dite solution d'alimentation ; chacun des dits au moins un courant des solutions d'alimentation (42) et de stripage (46) étant sous l'influence d'un premier (30, 32) et d'un second (34, 36) champ électrostatique, respectivement, pour au moins une partie de leur temps de passage au travers du dit liquide porteur, afin de casser les dits courants en une multitude de gouttelettes (60, 62) de chacune des dites solutions ; réaliser des moyens à chicanes (26) entre le dit au moins un des courants de chacune des solutions d'alimentation et de stripage, pour réduire le transfert de la solution d'alimentation vers le courant de solution de stripage et transférer la dite solution de stripage vers le courant de solution d'alimentation ; les dits moyens à chicanes étant également disposés entre les premier et second champs électrostatiques auxquels sont soumis les deux courants de solutions d'alimentation et de stripage ; et, fournir des moyens de réception séparés mutuellement (22, 24) pour collecter les courants des dites solutions d'alimentation (54) et de stripage (56) après qu'elles soient passées dans les dits champs électrostatiques ; le dit procédé étant caractérisé en ce qu'au moins un troisième champ électrostatique (100, 102) est appliqué au travers de la région des dites chicanes (26), le troisième champ électrostatique étant à un niveau tel qu'il favorise la coalescence des dites gouttelettes (60, 62) restant à l'extérieur des dits premier et second champs électrostatiques, dans la région des dits moyens à chicanes.

2. Procédé selon la revendication 1, caractérisé en ce que l'intensité du troisième champ au travers des moyens à chicanes est plus basse que l'intensité de champ critique apte à provoquer la cassure des courants de solutions d'alimentation et de stripage.

3. Procédé selon l'une des revendications 1 ou 2, caractérisé en ce que l'intensité du troisième champ (100, 102) est plus basse que les intensités, soit du premier, soit du second champ.

4. Procédé selon l'une des revendications précédentes, caractérisé en ce que l'intensité de champ nominal au travers de la région de chicanes est dans la gamme de 2kV/cm et 5kV/cm.

5. Appareil pour l'extraction d'un corps dissout à partir d'une solution d'alimentation aqueuse (42) dans une solution aqueuse de stripage (46), l'appareil comprenant des moyens récipients (12) pour contenir un liquide porteur non-polaire continu (28), le liquide porteur possédant en son sein un corps chimique ayant une affinité pour des ions d'au moins une espèce dans le dit corps dissout dans la dite solution d'alimentation ; des moyens (40, 44) pour réaliser au moins un courant de chacun des dites solutions d'alimentation et de stripage au travers du dit liquide porteur, dans les dits moyens récipients, des moyens électrodes (30, 32 ; 34, 36) pour appliquer un premier champ électrostatique et un second champ électrostatique de haute intensité, à chacun des dits courants de solutions d'alimentation et de stripage, respectivement, afin de provoquer la cassure des dits courants en une multitude de gouttelettes plus petites (60, 62) ; les moyens à chicanes (26) étant disposés entre les moyens électrodes pour établir les dits premier et second champs électrostatiques à haute intensité, pour réduire le transfert au travers des chicanes, des solutions d'alimentation et de stripage; des moyens de réception séparés mutuels pour recueillir les dites solutions d'alimentation et de stripage après qu'elles soient passées au travers des dits premier et second champs électrostatiques de haute intensité, respectivement, l'appareil étant caractérisé en ce qu'il comporte en outre des moyens (100, 102) pour appliquer un troisième champ électrostatique autour des moyens à chicanes, ledit troisième champ électrostatique étant à un niveau tel qu'il favorise la coalescence des dites gouttelettes (60, 62) restant à l'extérieur des dits premier et second champs électrostatiques dans la région des dits moyens à chicanes.

6. Appareil selon la revendication 5, caractérisé en ce que le troisième champ électrostatique est appliqué par des électrodes séparées (100, 102) disposés autour des moyens à chicanes (26).

7. Appareil selon la revendication 5 ou 6, caractérisé en ce que le troisième champ électrostatique est appliqué à l'aide d'un potentiel électrique (110) au travers des électrodes disposées autour des chicanes.

8. Appareil selon l'une des revendications 5 ou 6, caractérisé en ce que les électrodes sont réalisées à partir de maillages, plaques perforées ou à partir de matrices de fils.

9. Appareil selon la revendication 7 en dépendance avec la revendication 5, caractérisé en ce que le potentiel est appliqué en reliant les électrodes dans les cellules d'alimentation et de stripage séparées entre les moyens à chicanes, à un transformateur unique multi-prises.

10. Appareil selon la revendication 7, en dépendance avec la revendication 5, caractérisé en ce que le potentiel est appliqué au moyen d'une différence de phase entre des potentiels AC appliqués aux paires d'électrodes dans les deux cellules séparées par les moyens à chicanes.
